# EUROPEAN PATENT SPECIFICATION

(11) **EP 2 365 571 B1**
(45) Date of publication and mention of the grant of the patent: **05.06.2013**
(21) Application number: 11156784.8
(22) Date of filing: 03.03.2011
(51) Int. Cl.: H01M 10/05, H01M 10/056, H01M 4/13

(54) **Nonaqueous electrolyte secondary battery**
Sekundärbatterie mit einem nicht-wässrigen Elektrolyt
Batterie secondaire avec électrolyte non-aqueux

(30) Priority: 11.03.2010 JP 2010054889
(43) Date of publication of application: 14.09.2011
(73) Proprietor: Sanyo Electric Co., Ltd., Moriguchi-shi Osaka, 570-8677 (JP)
(72) Inventor: Sakitani, Nobuhiro, Moriguchi-shi, Osaka 5708677 (JP); Aizawa, Tatsuya, Moriguchi-shi, Osaka 570-8677 (JP); Yamamoto, Satoshi, Moriguchi-shi, Osaka 570-8677 (JP)
(74) Representative: Glawe, Delfs, Moll

(56) References cited:
- EP-A1- 2 246 923
- US-A1- 2008 118 847
- US-A1- 2008 220 336

## Description

### TECHNICAL FIELD

The present invention relates to a nonaqueous electrolyte secondary battery, and more particularly to a nonaqueous secondary battery with a small increase in internal resistance and less gas generation during high-temperature charged storage, and with a high residual capacity, when using a non-aqueous electrolyte containing a nitrile group-containing compound.

### BACKGROUND ART

Recently, as power supplies for driving portable electronic equipment, such as cell phones, portable personal computers, and portable music players, and further, as power supplies for hybrid electric vehicles (HEVs) and electric vehicles (EVs), nonaqueous secondary batteries represented by lithium ion secondary batteries having a high energy density and high capacity are widely used.

For the positive electrode active material in these nonaqueous secondary batteries, use is made, either singly or mixed together, of LiCoO₂, LiNiO₂, LiNiₓCo₁₋ₓO₂ (x = 0.01 to 0.99), LiMnO₂ LiMn₂O₄, and LiCoₓMnyNi_{z}O₂ (x + y + z = 1), or LiFePO₄ or the like, all of which can reversibly absorb and desorb lithium ions.

Among them, lithium-cobalt composite oxides and dissimilar metallic element-containing lithium-cobalt composite oxides are primarily used because their battery characteristics in various aspects are especially higher than those of other oxides. However, cobalt is expensive and exists in small amounts as a natural resource. Thus, in order to continue to use such lithium-cobalt composite oxides and dissimilar metallic element-containing lithium-cobalt composite oxides as the positive electrode active material of nonaqueous secondary batteries, it is desired to raise the performance of nonaqueous secondary batteries to even higher levels.

On the other hand, a nonaqueous electrolyte secondary battery tends to suffer positive electrode degradation when being stored in a charged state under high-temperature conditions. This is because the storage of a nonaqueous electrolyte secondary battery in a charged state causes oxidative decomposition of the nonaqueous electrolytic solution on the positive electrode active material and elution of transition metal ions of the positive electrode active material. Moreover, the decomposition of the nonaqueous electrolytic solution and the metal ion elution may proceed faster in a high-temperature environment than in a room-temperature environment.

In this respect, JP-A-2004-179146 discloses a case in which a variety of dinitrile compounds is added to a nonaqueous electrolyte for the purpose of improving the cycling characteristics, battery capacity, and high-temperature charged storage characteristics of a nonaqueous electrolyte secondary battery. JP-T-2007-538365 discloses a case in which a nitrile group-containing compound is added to a nonaqueous electrolyte for the purpose of improving the high-temperature cycling characteristics and safety, and in addition, fluorinated toluene is added to the nonaqueous electrolyte for the purpose of preventing battery expansion phenomena and capacity reduction during high-temperature charged storage.

JP-A-2008-108586 discloses a case in which a dinitrile compound is added to a nonaqueous electrolyte for the purpose of achieving a nonaqueous electrolyte secondary battery with high capacity and superior charge-discharge cycling and absorption characteristics. JP-A-2009-32653 discloses a case of the use of a nonaqueous electrolytic solution containing a compound including two to four nitrile groups in its structural formula and at least one compound selected from the group consisting of fluorinated cyclic carbonate having two or more fluorine atoms, monofluorophosphate, and difulorophosphate, for the purpose of preventing gas generation during high-temperature charged storage and for improving the cycling characteristics in a nonaqueous secondary battery.

US Patent Publication No. 2008/0118847 discloses a case in which an inorganic material coating layer of Al₂O₃, ZrO₂, or the like is formed on the surface of positive electrode active material particles and a dinitrile compound is added to a nonaqueous electrolytic solution for the purpose of improving the cycling characteristics at high temperature (60°C) and the trickle charging characteristic at low voltage.

PCT Publication No. WO 2006/038532 discloses a separator having impregbability with nonaqueous electrolytic solution, mechanical strength, and permeability as well as high-temperature charged storage characteristics, when used in a battery. The separator is a microporous polyolefin multilayer film formed of a stack of two or more films containing polyethylene and polypropylene, with the content of the polypropylene, which contains inorganic particles, in on at least one surface layer being not less than 5% by mass and not more than 90% by mass.

According to the inventions disclosed in JP-A-2004-179146, JP-T-2007-538365, JP-A-2008-108586, and JP-A-2009-32653, it is recognized to some extent that because a nitrile group-containing compound is absorbed into the surface of the positive electrode active material in a charged state, the surface of the positive electrode active material can be protected, and the side reactions between the nonaqueous electrolyte and the positive electrode active material can be inhibited, and therefore these inventions have advantages for improving battery characteristics during high-temperature storage. However, when a nonaqueous electrolyte containing a nitrile group-containing compound is stored in a charged state at a high temperature, as set forth in JP-A-2007-538365 and JP-A-2009-32653, part of the nitrile group-containing compound decomposes and generates gas. Moreover, according to the results of experiments by the present inventors, when a nonaqueous electrolyte containing a nitrile compound is used, an increase in internal resistance is observed in the battery after storage in a charged state at a high temperature, which is presumably caused by excessive formation of a protective film on the surface of the positive electrode active material.

Furthermore, when the surface of the positive electrode active material particles is coated with an inorganic material coating layer of Al₂O₃, ZrO₂ or the like, as in the invention disclosed in US Patent Publication No. 2008/0118847, the inorganic material coating layer, which constitutes an insulating material, is not involved in the electrode reactions, and therefore, to a degree corresponding to that non-involvement, the capacity per unit volume of the battery is reduced and the internal resistance increases. Moreover, US Patent Publication No. 2008/0118847 does not disclose any gas generation state during high-temperature charged storage when a nonaqueous electrolyte containing a nitrile group-containing compound is used.

PCT Publication No. WO 2006/038532 sets forth a separator that enables improvement of the high-temperature charged storage characteristics of a nonaqueous electrolyte secondary battery. However, the separator is formed of a multilayer film of two or more layers containing polyethylene and polypropylene, and the inorganic particles are dispersed in a microporous polyolefin film that contains polypropylene. Therefore, the effect, to be described later, of trapping of decomposition products by the inorganic particles cannot be adequately obtained. Moreover, PCT Publication No. WO 2006/038532 sets forth nothing concerning gas generation or increased internal resistance during high-temperature charged storage when a nonaqueous electrolyte containing a nitrile group-containing compound is used.

EP 2 246 923 A1 discloses a non-aqueous electrolyte secondary battery comprising a positive electrode plate, a negative electrode plate, a non-aqueous electrolyte, a separator provided between the positive electrode plate and the negative electrode plate and a layer of inorganic particles; this document is a publication under Article 54(3) EPC.

The present inventors have conducted various studies on the conditions for achieving a nonaqueous electrolyte secondary battery with a smaller increase in internal resistance and less gas generation during high-temperature charged storage, and with a high residual capacity, even when a nonaqueous electrolyte containing a nitrile group-containing compound is used without an inorganic material coating layer being formed on the surface of the positive electrode active material particles. As a result, the inventors arrived at the present invention when they discovered that forming an inorganic particle layer between the positive electrode plate and the negative electrode plate can provide a solution.

### SUMMARY

A non-aqueous electrolyte secondary battery according to the invention is defined in claim 1; the dependent claims are related to further developments of the invention.

An advantage of some aspects of the invention is to provide a nonaqueous electrolyte secondary battery with a smaller increase in internal resistance and less gas generation during high-temperature charged storage, and with a high residual capacity, even when a commonly used nonaqueous electrolyte containing a nitrile group-containing compound is used without an inorganic material coating layer being formed on the surface of positive electrode active material particles.

According to an aspect of the present invention, a nonaqueous electrolyte secondary battery includes a positive electrode plate containing positive electrode active material, a negative electrode plate containing negative electrode active material, a nonaqueous electrolyte containing a nitrile group-containing compound, and a separator provided between the positive electrode plate and the negative electrode plate. A layer of inorganic particles is formed between the positive electrode plate and the separator or between the negative electrode plate and the separator.

In the nonaqueous electrolyte secondary battery according to the aspect of the invention, an inorganic particle layer is formed between the positive electrode plate and the separator or between the negative electrode plate and the separator. Such inorganic particle layer traps the decomposition products of the nitrile group-containing compound that are generated on the surface of the positive electrode active material before the products reach the negative electrode surface, thereby preventing them from reaching the negative electrode surface. Accordingly, it becomes possible to prevent gas generation at the negative electrode when the battery is stored in a charged state under high temperature conditions.

The inorganic particles used to form the inorganic particle layer may be selected as appropriate from among rutile-type titanium oxide (rutile-type titania), aluminum oxide (alumina), zirconium oxide (zirconia), magnesium oxide (magnesia), and the like.

In the nonaqueous electrolyte secondary battery according to the aspect of the invention, it is preferable that the inorganic particle layer be formed between the positive electrode plate and the separator.

Decomposition products of the nitrile group-containing compound are formed on the surface of the positive electrode active material. Therefore, the decomposition products can be trapped more efficiently when the inorganic particle layer is formed in the vicinity of the positive electrode plate, which is the source of generation of the decomposition products of the nitrile group-containing compound, as in the nonaqueous electrolyte secondary battery according to the aspect of the invention.

In the nonaqueous electrolyte secondary battery according to the aspect of the invention, it is preferable that the inorganic particle layer be formed on a surface of the positive electrode plate.

If the inorganic particle layer is formed on a surface of a sheet-like separator, the inorganic particle layer may shrink together with the sheet-like separator when heat is generated. By contrast, it is preferable, in terms of safety of batteries, to form an inorganic particle layer on the surface of the positive electrode plate as in the nonaqueous electrolyte secondary battery according to the aspects of the invention, because then the inorganic particle layer will not shrink even when heat is generated, and therefore, short circuits between the positive electrode and the negative electrode will be unlikely to occur.

In the nonaqueous electrolyte secondary battery according to the aspect of the invention, it is preferable that the nitrile group-containing compound be contained in a proportion of not less than 0.05% by mass and not more than 5.0% by mass with respect to the total mass of the nonaqueous electrolyte.

If the content of the nitrile group-containing compound is less than 0.05% by mass with respect to the total mass of the nonaqueous electrolyte, the advantageous effects of the nitrile group-containing compound will not manifest, whereas if it exceeds 5.0% by mass, the protective coating formed on the surface of the positive electrode plate will become too thick, thereby inhibiting absorption and desorption of Li ions into/from the positive electrode active material. Hence, the advantageous effects will be exerted satisfactorily when the content of the nitrile group-containing compound is not less than 0.05% by mass and not more than 5.0% by mass with respect to the total mass of the nonaqueous electrolyte, as in the nonaqueous electrolyte secondary battery according to the aspect of the invention.

In the nonaqueous electrolyte secondary battery according to the aspect of the invention, the average particle size of the inorganic particles is not more than 1 µm.

When the average particle size of the inorganic particles is not more than 1 µm, the size of the pores formed in the inorganic particle layer will be small enough to effectively trap the decomposition products of the nitrile group-containing compound. A more preferable average particle size for the inorganic particles will be in the range of 0.1 to 0.8 µm. In consideration of the dispersiveness in slurry during preparation of the inorganic particle layer, the surfaces of the inorganic particles will preferably be treated with a compound that is able to impart hydrophilicity, such as Al, Si, or Ti.

In the nonaqueous electrolyte secondary battery according to the aspect of the invention, it is preferable that the inorganic particles be at least one kind selected from among rutile-type titania and alumina.

Rutile-type titania or alumina particles are inexpensive in cost, do not react readily with lithium metal or lithium ions, and are capable of being stably present in a nonaqueous electrolyte secondary battery according to the aspect of the invention. Therefore, the inorganic particle layer degrades less in the nonaqueous electrolyte secondary battery according to the aspect of the invention, in which the inorganic particles that form the inorganic particle layer are rutile-type titania or alumina.

In the nonaqueous electrolyte secondary battery according to the aspect of the invention, it is preferable that the average pore size of the separator be smaller than the average particle size of the inorganic particles used in the inorganic particle layer.

When the average pore size of the separator is smaller than the average particle size of the inorganic particles used for the inorganic particle layer, then even if some of the inorganic particles separate off, those inorganic particles will be prevented from intruding into the micro-pores of the separator, so that reduction in the discharging performance can be avoided. Therefore, this aspect of the invention provides a nonaqueous electrolyte secondary battery in which variation in the charge-discharge characteristics is small.

In the nonaqueous electrolyte secondary battery according to the aspect of the invention, it is preferable that the inorganic particle layer have a thickness of not more than 4 µm.

If the inorganic particle layer is too thin, the advantageous effects obtained by forming the inorganic particle layer may be unsatisfactory, whereas if the inorganic particle layer is too thick, the load characteristic and the energy density of the battery may be reduced. More preferably, the thickness of the inorganic particle layer will be in the range of 0.5 µm to 4 µm, and still more preferably, in the range of 0.5 µm to 2 µm.

### BRIEF DESCRIPTION OF THE DRAWINGS

The invention will be described with reference to the accompanying drawings, wherein like numbers reference like elements.

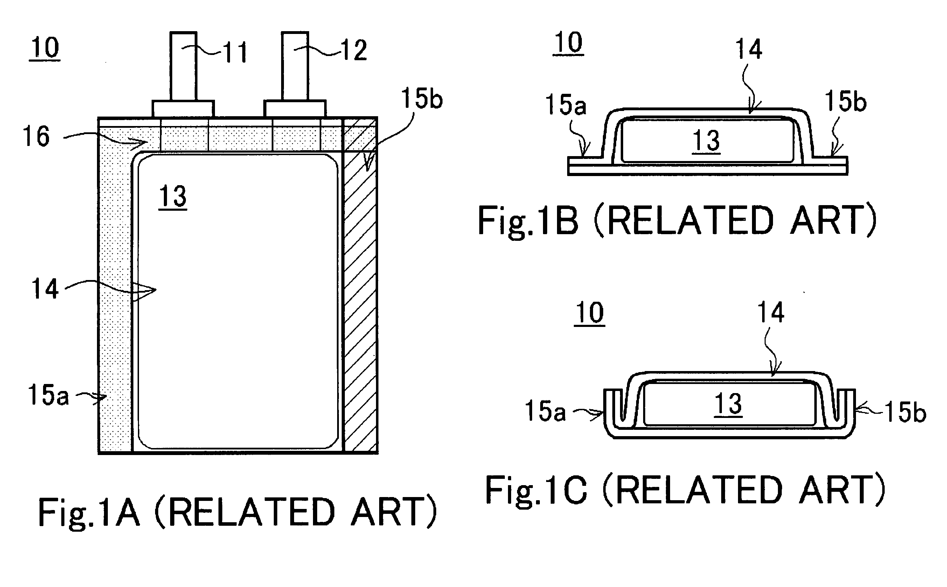

Fig. 1A is a plan view of a laminate-type nonaqueous electrolyte secondary battery used for determination of a variety of battery characteristics in the Examples and Comparative Examples, Fig. 1B is a bottom view of Fig. 1A, and Fig. 1C is a bottom view of the laminate-type nonaqueous electrolyte secondary battery when being actually used.

### DESCRIPTION OF EXEMPLARY EMBODIMENTS

Exemplary embodiments of the invention will now be described in detail with reference to examples and comparative examples. However, the examples described below are merely illustrative examples of nonaqueous electrolyte secondary batteries that embody the technical spirit of the invention, and are not intended to limit the invention to these particular nonaqueous electrolyte secondary batteries. The invention can be equally applied to various modified cases without departing from the technical spirit described in the claims.

### Preparation of Positive Electrode Plate

Lithium cobalt oxide as positive electrode active material, acetylene black as a carbonaceous conductive material, and PVDF (polyvinylidene fluoride) were mixed in the proportions of 95 : 2.5 : 2.5 by mass. This mixture was then mixed with NMP (N-methylpyrrolidone) as a solvent, using a mixer, to prepare positive electrode mixture slurry. The slurry was applied to both surfaces of a positive electrode collector of aluminum having a thickness of 15 µm by the doctor blade method, and dried to form active material layers on both surfaces of the positive electrode collector. Then, the resultant product was compressed using a compression roller to produce a positive electrode plate having a short side length of 50.0 mm. The packing density of the positive electrode plate was 3.60 g/cm³.

### Formation of Porous Layer on Positive Electrode Plate Surface

In the Examples 1 to 4 and the Comparative Example 3, an inorganic particle layer was formed on the surface of the positive electrode plate. The inorganic particle layer was formed as follows. First, aqueous slurry for forming an inorganic particle layer was prepared using water as a solvent, titanium oxide (TiO₂, average particle size 0.25 µm, no surface treated layer, trade name "CR-EL", manufactured by ISHIHARA SANGYO KAISHA, LTD.) as inorganic particles, carboxymethyl cellulose CMC (the trade name of "1380" manufactured by DAICEL CHEMICAL INDUSTRIES, LTD.) as a dispersion stabilizer, and SBR (styrene-butadiene rubber) as an aqueous binder.

The aqueous slurry was prepared in such a manner that the concentration of the solid content of the inorganic particles was 30 parts by mass, the content of the dispersion stabilizer was 0.2 parts by mass with respect to 100 parts by mass of the inorganic particles, and the content of the binder was 3.8 parts by mass with respect to 100 parts by mass of the inorganic particles. The aqueous slurry was coated onto both surfaces of the positive electrode plate by using a gravure method. The water serving as solvent was then dried and removed, resulting in inorganic particle layers on both surfaces of the positive electrode plate. The thickness of each inorganic particle layer was 2 µm, so that the total thickness of the inorganic particle layers on both surfaces was formed to be 4 µm.

### Preparation of Negative Electrode Plate

Negative electrode slurry was prepared from artificial graphite, a solution of 1% by mass of CMC (trade name "1380" manufactured by DAICEL CHEMICAL INDUSTRIES, LTD.) in pure water, and SBR, in the solid content mass proportion of 98 : 1 : 1, using a multi-shaft disperser/kneader ("T.K. COMBI MIX (R)" manufactured by PRIMIX Corporation). Then the slurry was applied to both surfaces of a negative electrode collector of copper having a thickness of 8 µm by the doctor blade method, and then dried to form active material layers on both surfaces of the negative electrode collector. After that, the resultant product was compressed using a compression roller to produce a negative electrode plate having a short side length of 52.0 mm. The packing density of the negative electrode plate was 1.60 g/cc.

It is to be noted that the potential of graphite is 0.1V relative to lithium. The active material packing amounts in the positive electrode plate and the negative electrode plate were adjusted so that the ratio of the positive electrode plate and negative electrode plate charging capacities (negative electrode charging capacity divided by positive electrode charging capacity) was 1.1 at the potential of the positive electrode active material (4.45 V relative to lithium) as design standard.

### Preparation of Electrolytic Solution

Ethylene carbonate (EC) and dimethyl carbonate (DMC) were mixed as nonaqueous solvents in the proportion of 30 : 70 by volume. Then lithium hexafluorophosphate (LiPF₆) as an electrolyte salt was dissolved in the mixed solvent to the amount of 1 M (mol/liter). Then, pimelonitrile or adiponitrile was added as a nitrile group-containing compound in a predetermined proportion to prepare an electrolytic solution. The amount of the added pimelonitrile was 1% by mass in the batteries of the Example 1 and the Comparative Example 1, 0.5% by mass in the battery of the Example 2, and 0.05% by mass in the battery of the Example 3. The amount of the added adiponitrile was 1% by mass in the batteries of the Example 4 and the Comparative Example 4. In the batteries of the Comparative Examples 2 and 3, neither pimelonitrile nor adiponitrile was added.

### Preparation of Battery

The positive electrode plate and the negative electrode plate, each provided with a lead terminal, were spirally wound with a separator (made of polyethylene, film thickness 16 µm, porosity 47%) interposed therebetween. The spirally wound electrode assembly was pressed into a flat shape and inserted into an aluminum laminate battery outer case. Then, the electrolytic solution was poured into the battery outer case and sealed, resulting in a laminate-type nonaqueous electrolyte secondary battery for testing. The design capacity of the laminate-type nonaqueous electrolyte secondary battery was 850 mAh with charging final voltage of 4.35 V.

The structure of this laminate-type nonaqueous electrolyte secondary battery is shown in Fig. 1. As shown in Fig. 1A and Fig. 1B, in a laminate-type nonaqueous electrolyte secondary battery 10, a flat-shaped spirally-wound electrode assembly 13 having a positive electrode lead terminal 11 and a negative electrode lead terminal 12 is disposed in a cup-like laminated molded body 14. First and second side seal portions 15a and 15b are formed on both side edges, and a top seal portion 16 is formed on the upper edge. Both of the side seal portions 15a and 15b are normally folded to extend along the cup-like molded body 14 during use, as shown in Fig. 1C.

### Determination of High-Temperature Charged Storage Characteristics

High-temperature charged storage characteristics were determined as follows for the batteries of the Examples 1 to 4 and the Comparative Examples 1 to 4 prepared as described above. First, each battery was charged at 25 °C at a constant current of 1 It = 850 mA until the battery voltage reached 4.35 V. After the battery voltage reached 4.35 V, the battery was charged at a constant voltage of 4.35V until the charging current reached 1/50 It = 17 mA. As a result, a fully-charged battery was obtained. Then the discharge capacity when the battery was discharged 3.0 V at a constant current of 1 It until the battery voltage reached was measured and taken as the initial discharge capacity.

Then, after the initial discharge capacity was measured, each battery was charged again at 25 °C at a constant current of 1 It until the battery voltage reached 4.35 V. After the battery voltage reached 4.35 V, the battery was charged at a constant voltage of 4.35 V until charging current reached 1/50 It. As a result, a fully-charged battery was obtained. Each fully-charged battery was stored in a thermostatic chamber at 60 °C for 30 days and then left to cool down to 25°C. The discharge capacity when the battery was discharged at a constant current of 1 It until the battery voltage reached 3.0 V was measured, and the residual capacity was derived as the ratio (%)of such discharge capacity after high-temperature storage to the initial discharge capacity. Such residual capacity is used to determine the self-discharge amount during high-temperature storage. The higher the self-discharge amount is, residual capacity the lower the residual capacity is..

For each battery before and after being stored in a thermostatic chamber, the amount of internal resistance change before and after high-temperature storage was determined by measuring the internal resistance by using the AC method, and in addition, the rate of increase (%) in battery thickness was determined by measuring the thickness of the battery with a digital indicator (manufactured by Sony Corporation). The results are listed in Table 1.

**[Table 1]**

| | Nitrile group-containing compound | Content (% by mass) | Porous layer | Amount of internal resistance change (mΩ) before and after storage | Residual capacity (%) | Rate of increase in battery thickness (%) |
|---|---|---|---|---|---|---|
| Exainple 1 | Pimelonitrile | 1.0 | Present | Δ11.7 | 76 | 1.5 |
| Example 2 | Pimelonitrile | 0.5 | Present | Δ11.2 | 71 | 1.6 |
| Example 3 | Pimelonitrile | 0.05 | Present | Δ10.9 | 65 | 1.8 |
| Comparative Example 1 | Pimelonitrile | 1.0 | Absent | Δ25.2 | 52 | 4.6 |
| Comparative Example 2 | - | - | Absent | Δ10.4 | 38 | 1.3 |
| Comparative Example 3 | - | - | Present | Δ10.7 | 56 | 1.5 |
| Example 4 | Adiponitrile | 1.0 | Present | Δ10.1 | 73 | 1.7 |
| Comparative Example 4 | Adiponitrile | 1.0 | Absent | Δ21.3 | 48 | 4.9 |

From the results shown in Table 1, the following are found. When comparing the measurement results for the batteries of the Comparative Example 1 and the Comparative Example 2, neither of which has an inorganic particle layer on the surface of the positive electrode plate, the residual capacity of the battery of the Comparative Example 1 is higher than that of the battery of the Comparative Example 2, but the increase in internal resistance and the rate of increase in battery thickness are larger. This is possibly because the pimelonitrile, which is a nitrile group-containing compound, formed a protective coating on the positive electrode active material surface and inhibited reaction between the positive electrode active material and the nonaqueous electrolytic solution, thereby improving the residual capacity, while the decomposition products of part of the pimelonitrile reacted on the surface of the negative electrode plate, causing gas generation and thus an increase in battery thickness.

When comparing the measurement results of the battery of the Comparative Example 1, which has no inorganic particle layer on the surface of the positive electrode plate, and the battery of the Example 1, which has an inorganic particle layer on the surface of the positive electrode plate, 1% by mass of pimelonitrile being added to the nonaqueous electrolytic solution in both Examples, the residual capacity is higher and the rate of increase in internal resistance and the rate of increase in battery thickness are lower in the battery of the Example 1. This may be because the inorganic particle layer formed on the surface of the positive electrode plate trapped the decomposition products of part of the pimelonitrile and prevented them from reaching the surface of the negative electrode plate, thereby reducing gas generation and preventing an increase in battery thickness. In addition, the prevention of a battery thickness increase may also have prevented an increase in internal resistance of the battery and have improved the residual capacity.

When comparing the measurement results of the battery of Comparative Example 2, which has no inorganic particle layer on the surface of the positive electrode plate and the battery of the Comparative Example 3, which has an inorganic particle layer on the surface of the positive electrode plate, no pimelonitrile being added to the nonaqueous electrolytic solution in either Example, the residual capacity of the battery of the Comparative Example 3 is higher, but the rate of increase in internal resistance and the rate of increase in battery thickness are substantially equal between the Comparative Examples 2 and 3. This indicates that the formation of an inorganic particle layer on the surface of the positive electrode plate does not have an effect of preventing an increase in battery thickness.

Accordingly, when the measurement results for the batteries of the Comparative Examples 1 to 3 are comprehensively evaluated, it is clear that even with a combination of the addition of a nitrile group-containing compound to the nonaqueous electrolytic solution and the formation of an inorganic particle layer on the surface of the positive electrode plate, one cannot readily expect the nitrile group-containing compound to have the effect of preventing battery expansion as in the battery of the Example 1.

Furthermore, when comparing the measurement results of the batteries of the Examples 1 to 3, all of which have an inorganic particle layer on the surface of the positive electrode layer but which differ in the amount of pimelonitrile that is added, it is recognized that the effect of improving the residual capacity is smaller as the amount of pimelonitrile that is added is decreased. Thus it will be seen that the amount of nitrile group-containing compound that is added to the nonaqueous electrolytic solution will preferably be not less than 0.05% by mass.

Furthermore, when comparing the measurement results for the battery of the Comparative Example 4, which has no inorganic particle layer on the surface of the positive electrode plate, and the battery of the Example 4, which has an inorganic particle layer on the surface of the positive electrode plate, 1% by mass of adiponitrile being added to the nonaqueous electrolytic solution in both cases, the residual capacity is higher and the rate of increase in internal resistance and the rate of increase in battery thickness are smaller in the battery of the Example 4. This indicates that adiponitrile exerts a similar effect to pimelonitrile as a nitrile group-containing compound. Therefore, according to some aspects of the invention, it is recognized that, as a nitrile group-containing compound other than adiponitrile, at least pimelonitrile can be used to achieve a similar effect. It is also recognized that even an ordinary nitrile group-containing compound will also achieve a similar effect because the effect of an additive such as adiponitrile and pimelonitrile results from the presence of a nitrile group (cyano group) in the molecules.

Note that although the inorganic particle layer is formed on the surface of the positive electrode plate in the Examples, the inorganic particle layer may alternatively be formed on the surface of the negative electrode plate. However, considering that the decomposition products of the nitrile group-containing compound are formed on the positive electrode plate, forming the layer on the surface of the positive electrode plate exerts a better effect.

In the Examples and Comparative Examples, laminate-type nonaqueous electrolyte secondary batteries are described by way of example in order to easily determine the amount of gas generation inside the battery, that is, the battery expansion. However, the invention does not depend on the shape of the electrode assembly of a nonaqueous electrolyte secondary battery, and therefore is applicable to a cylindrical nonaqueous electrolyte secondary battery using a cylindrical spirally-wound electrode assembly, a prismatic or elliptic cylindrical nonaqueous electrolyte secondary battery using a spirally-wound electrode assembly in a flat shape, or a stack-type nonaqueous electrolyte secondary battery having a stack of a positive electrode plate and a negative electrode plate with a separator interposed therebetween, besides other like batteries.

In the Examples and Comparative Examples, lithium cobalt oxide was used as positive electrode active material, and the charging voltage was as high as 4.35 V (positive electrode potential is 4.45 V relative to lithium). However, such a high charging voltage was used to confirm in a short time the effect of addition of a nitrile group-containing compound, because a higher charging voltage accelerates the reactions of the nitrile group-containing compound on the surface of the positive electrode active material.

Therefore, the nonaqueous electrolyte secondary battery according to some aspects of the invention may be equally applicable in the case of using LiCoO₂, LiNiO₂, LiNiₓCo₁₋ₓO₂ (x = 0.01 to 0.99), LiMnO₂ LiMn₂O₄ LiCoₓMnyNi_{z}O₂ (x + y + z = 1), or LiFePO₄, which are capable of reversibly absorbing and desorbing lithium ions and are commonly used as positive electrode active material.

## Claims

1. A nonaqueous electrolyte secondary battery comprising:
a positive electrode plate containing positive electrode active material;
a negative electrode plate containing negative electrode active material;
a nonaqueous electrolyte containing a nitrile group-containing compound; and
a separator provided between the positive electrode plate and the negative electrode plate;
a layer of inorganic particles being formed between the positive electrode plate and the separator or between the negative electrode plate and the separator,
wherein the average particle size of the inorganic particles is not more than 1 µm.

2. The nonaqueous electrolyte secondary battery according to claim 1, wherein the inorganic particle layer is formed between the positive electrode plate and the separator.

3. The nonaqueous electrolyte secondary battery according to claim 1 or 2, wherein the inorganic particle layer is formed on a surface of the positive electrode plate.

4. The nonaqueous electrolyte secondary battery according to any one of claims 1 to 3, wherein the nitrile group-containing compound is contained in a proportion of not less than 0.05% by mass and not more than 5.0% by mass with respect to the total mass of the nonaqueous electrolyte.

5. The nonaqueous electrolyte secondary battery according to any one of claims 1 to 4, wherein the inorganic particles are at least one kind selected from among rutile-type titania and alumina.

6. The nonaqueous electrolyte secondary battery according to any one of claims 1 to 5, wherein the average pore size of the separator is smaller than the average particle size of the inorganic particles used in the inorganic particle layer.

7. The nonaqueous electrolyte secondary battery according to any one of claims 1 to 6, wherein the inorganic particle layer has a thickness of not more than 4 µm.

## Patentansprüche

1. Sekundärbatterie mit nichtwässrigem Elektrolyt, die folgendes umfasst:
eine positive Elektrodenplatte, die ein positives aktives Elektrodenmaterial enthält;
eine negative Elektrodenplatte, die ein negatives aktives Elektrodenmaterial enthält;
einen nichtwässrigen Elektrolyten, der eine Verbindung enthält, die eine Nitrilgruppe enthält; und
einen Separator, der zwischen der positiven Elektrodenplatte und der negativen Elektrodenplatte vorgesehen ist;
eine Schicht von anorganischen Teilchen, die zwischen der positiven Elektrodenplatte und dem Separator oder zwischen der negativen Elektrodenplatte und dem Separator gebildet ist,
wobei die mittlere Teilchengröße der anorganischen Teilchen nicht mehr als 1 µm beträgt.

2. Sekundärbatterie mit nichtwässrigem Elektrolyt gemäß Anspruch 1, wobei die anorganische Teilchenschicht zwischen der positiven Elektrodenplatte und dem Separator gebildet ist.

3. Sekundärbatterie mit nichtwässrigem Elektrolyt gemäß Anspruch 1 oder 2, wobei die anorganische Teilchenschicht auf einer Oberfläche der positiven Elektrodenplatte gebildet ist.

4. Sekundärbatterie mit nichtwässrigem Elektrolyt gemäß einem der Ansprüche 1 bis 3, wobei die Verbindung, die eine Nitrilgruppe enthält, in einem Anteil von nicht weniger als 0,05 Massenprozent und nicht mehr als 5,0 Massenprozent hinsichtlich der gesamten Masse des nichtwässrigen Elektrolyten enthalten ist.

5. Sekundärbatterie mit nichtwässrigem Elektrolyt gemäß einem der Ansprüche 1 bis 4, wobei die anorganischen Teilchen mindestens eine Art ausgewählt aus Titandioxid vom Rutil-Typ und Aluminiumoxid sind.

6. Sekundärbatterie mit nichtwässrigem Elektrolyt gemäß einem der Ansprüche 1 bis 5, wobei die mittlere Porengröße des Separators kleiner als die mittlere Teilchengröße der anorganischen Teilchen, die in der anorganischen Teilchenschicht verwendet werden, ist.

7. Sekundärbatterie mit nichtwässrigem Elektrolyt gemäß einem der Ansprüche 1 bis 6, wobei die anorganische Teilchenschicht eine Dicke von nicht mehr als 4 µm aufweist.

## Revendications

1. Batterie secondaire à électrolyte non aqueux, comprenant :
une plaque électrode positive contenant un matériau actif d'électrode positive ,
une plaque électrode négative contenant un matériau actif d'électrode négative ,
un électrolyte non aqueux contenant un composé contenant un groupe nitrile , et
un séparateur prévu entre la plaque électrode positive et la plaque électrode négative ,
une couche de particules inorganiques formée entre la plaque électrode positive et le séparateur ou entre la plaque électrode négative et le séparateur,
dans laquelle la taille moyenne de particule des particules inorganiques n'est pas supérieure à 1 µm.

2. Batterie secondaire à électrolyte non aqueux selon la revendication 1, dans laquelle la couche de particules inorganiques est formée entre la plaque électrode positive et le séparateur.

3. Batterie secondaire à électrolyte non aqueux selon la revendication 1 ou 2, dans laquelle la couche de particules inorganiques est formée sur une surface de la plaque électrode positive.

4. Batterie secondaire à électrolyte non aqueux selon une quelconque des revendications 1 à 3, dans laquelle le composé contenant le groupe nitrile est contenu dans une proportion non inférieure à 0,05 % en masse et non supérieure à 5,0 % en masse par rapport à la masse totale de l'électrolyte non aqueux.

5. Batterie secondaire à électrolyte non aqueux selon une quelconque des revendications 1 à 4, dans laquelle les particules inorganiques sont au moins un type sélectionné parmi l'oxyde de titane de type rutile et l'alumine.

6. Batterie secondaire à électrolyte non aqueux selon une quelconque des revendications 1 à 5, dans laquelle la taille moyenne de pore du séparateur est inférieure à la taille moyenne de particule des particules inorganiques utilisées dans la couche de particules inorganiques.

7. Batterie secondaire à électrolyte non aqueux selon une quelconque des revendications 1 à 6, dans laquelle la couche de particules inorganiques possède une épaisseur non supérieure à 4 µm.
